# EUROPEAN PATENT SPECIFICATION

(11) **EP 3 970 829 B1**
(45) Date of publication and mention of the grant of the patent: **25.09.2024**
(21) Application number: 21733883.9
(22) Date of filing: 26.04.2021
(51) Int. Cl.: B01D 33/23, B01D 33/80, B01D 33/44, B01D 33/46, B01D 33/21, B01D 33/50, B01D 37/02

(54) **FIBER DISC FILTER COMPRISING GROOVE FORMATION MEANS FOR FORMING GROOVES ON SURFACE OF FILTER CLOTH**
FASERTRENNFILTER MIT MITTELN ZUR BILDUNG VON RILLEN AUF DER OBERFLÄCHE VON FILTERTÜCHERN
FILTRE À DISQUE EN FIBRE COMPRENANT UN MOYEN DE FORMATION DE RAINURE POUR FORMER DES RAINURES SUR LA SURFACE D'UNE TOILE FILTRANTE

(30) Priority: 03.08.2020 KR 20200096657
(43) Date of publication of application: 23.03.2022
(73) Proprietor: Moon, Yeon Uu, Goyang-si Gyeonggi-do 10474 (KR)
(72) Inventor: Moon, Yeon Uu, Goyang-si Gyeonggi-do 10474 (KR)
(74) Representative: BCKIP Part mbB
(86) International application number: PCT/KR2021/005220
(87) International publication number: WO 2022/030728

(56) References cited:
- WO-A1-2017/007417
- WO-A1-95/02442
- CN-A- 108 479 162
- JP-A- 2014 213 314
- KR-B1- 100 876 198
- KR-B1- 101 728 525
- US-A- 5 374 360
- US-A1- 2009 178 976
- US-A1- 2012 080 370
- US-A1- 2013 105 415

## Description

### BACKGROUND

### Field

The present disclosure relates to a fiber discfilter according to claim 1 and more particularly, to a fiber discfilter with a means of forming grooves on a surface of filter cloths, in which the fiber discfilter includes a groove forming means for forming the groove in the surface of the filter cloth having bristles, such that foreign substances in a deep part of the filter cloth as well as foreign substances on the surface of the filter cloth are uniformly captured through the groove formed in the surface of the filter cloth during a filtering process, thereby increasing the quantity of captured foreign substances and effectively removing the foreign substances captured in the deep part of the filter cloth during a cleaning process for regenerating the filter cloth.

### Description of the Related Art

In general, a fiber discfilter refers to a filter installed in a water channel or a water tub into which a liquid (hereinafter, referred to as 'inflow water') such as wastewater, dirty water, purified water, rainwater, or process water is introduced, and the fiber discfilter filters the inflow water by filtering out foreign substances contained in the inflow water.

The fiber discfilter includes a filter unit configured such that a plurality of filter segments each having front and rear surfaces on which filter cloths each having a surface with bristles are installed is installed on an outer portion of a drum. Foreign substances are filtered out by the bristles during a process in which the inflow water is introduced into the filter segments through the filter cloths. The treated water from which the foreign substances are removed is introduced into the drum from the filter segment and then discharged to a predetermined location.

As described above, according to the fiber discfilter, since the inflow water is filtered as the inflow water flows from the outside of the filter segment into the filter segment via the filter cloth, a large quantity of foreign substances is captured on an outer surface of the filter cloth that constitutes a surface of the filter segment.

Typically, because the entire surface of the filter cloth having the bristles is provided in the form of a flat surface, the foreign substances are concentratedly captured on the surface of the filter cloth. For this reason, a coating layer is formed on the surface of the filter cloth, and almost no foreign substance is captured in the deep part of the filter cloth.

As described above, since the fiber discfilter in the related art cannot capture the foreign substances by using both the surface part and the deep part of the filter cloth, there is a problem in that filtering efficiency deteriorates and frequent cleaning is required.

That is, during the process of filtering the inflow water which is performed as the inflow water passes through the cloth, a large quantity of foreign substances is captured on the surface part of the filter cloth, and the coating layer is formed on the surface of the filter cloth. The coating layer formed as described above inhibits the foreign substances from entering the deep part of the bristles, and as a result, a very small quantity of foreign substances is captured in the deep part of the bristles or almost no foreign substance is captured.

In the case in which the coating layer is formed on the surface of the filter cloth as described above, the inflow water cannot be smoothly introduced into the filter segment. For this reason, a filtering speed is decreased, filtering efficiency deteriorates, a water level in the water channel or the water tub is quickly raised, and a cleaning cycle is shortened.

Meanwhile, the fiber discfilter includes a cleaning device for removing the foreign substances captured in the filter cloth.

As the cleaning device, there are used a spray-type cleaning device which removes foreign substances by spraying high-pressure water toward the filter cloth, and a suction-type cleaning device which sucks and removes foreign substances captured in the filter cloth.

The spray-type cleaning device includes a spray nozzle disposed to be spaced apart from the surface of the filter cloth at a predetermined distance, and a pump connected to the spray nozzle and configured to pump the water to the spray nozzle.

The suction-type cleaning device includes a suction holder having a slit-shaped suction port elongated with a rectangular structure, and a pump connected to the suction holder and configured to provide a suction force.

Since the spray-type cleaning device and the suction-type cleaning device remove the foreign substances from the filter cloth merely by spraying water toward the surface of the filter cloth or sucking the foreign substances from the surface of the filter cloth, there is a problem in that the foreign substances captured in a deep part of the bristle cannot be smoothly removed.

If the foreign substances remain in the deep part of the filter cloth as described above, there is a problem in that cleaning is frequently required, and a chemical cleaning or high-pressure cleaning cycle is shortened.

### [Document of Related Art]

### [Patent Document]

(Patent Document 1) Korean Patent No. 10-1935748 (published on January 4, 2019)
CN 108479162 A discloses a fully immersed fiber turntable microfilter including a rotating shaft with seven sets of short shafts. A connecting frame is disposed between two adjacent short shafts, and the left and right sides of the connecting frame are provided with a filter cloth. An inner cavity of the rotating shaft is provided with a main pipe. The rear side of the main pipe is provided with a branch pipe, and the left and right sides of the branch pipe are provided with air holes. The output of an air pump is provided to the right side of the main pipe. The outer side of the connecting frame is provided with a U-shaped suction shell. The adjacent faces of left and right side walls of the U-shaped suction shell are sequentially provided with a scraper and a sealing plate from top to bottom, and the adjacent faces of the left and right side walls of the U-shaped suction shell are from top to bottom. A mud inlet and four groups of suction ports are located between the scraper and the sealing plate.
WO 95/02442 discloses a method of cleaning filter sectors of a disc filter. The method is suitable for continuously renewing the precoat layer on the filter surfaces of the disc filter and/or washing die wire surfaces by means of washing nozzles. The nozzle arms are arranged so as to be able to perform a reciprocating motion for washing and/or removing the precoat and/or washing the wire surface. The arms with their nozzles are located below each scraper.

### SUMMARY

An object to be achieved by the present disclosure is to provide a fiber discfilter including a groove forming means for forming a groove in a surface of a filter cloth, the fiber discfilter being configured such that foreign substances in a deep part of a filter cloth having bristles as well as foreign substances on a surface part of the filter cloth may be smoothly captured during a process of filtering inflow water, and all the foreign substances captured on the surface and in the deep part of the filter cloth may be smoothly removed during a cleaning process by a cleaning means.

Another object to be achieved by the present disclosure is to provide a fiber discfilter including a groove forming means for forming a groove in a surface of a filter cloth, in which the filter cloth is not damaged during a process of forming a groove in a surface of a filter cloth having bristles.

Still another object to be achieved by the present disclosure is to provide a fiber discfilter including a groove forming means for forming a groove in a surface of a filter cloth, in which a suction force of a suction holder constituting a cleaning means is prevented from deteriorating due to a groove formed in a filter cloth.

According to an aspect of the present disclosure, a fiber discfilter including a groove forming means for forming a groove in a surface of a filter cloth includes: a filter unit configured such that a plurality of filter segments each having front and rear surfaces on which filter cloths each having a surface provided with bristles are installed is installed on an outer portion of a drum so that inflow water is filtered by being introduced into the filter segments while passing through the filter cloths; a cleaning means configured to remove foreign substances captured in the filter cloths; and a groove forming means disposed to be positioned at the periphery of the filter unit and having a plurality of protrusions configured to be inserted into the surface of the filter cloth and form grooves in the surface of the filter cloth when the filter unit rotates, such that foreign substances on the surface of the filter cloth and foreign substances in a deep part of the filter cloth are uniformly captured during a process of filtering the inflow water, and the foreign substances captured in the deep part of the filter cloth are exposed during a process of cleaning the filter cloth, such that the foreign substances captured in the deep part are smoothly removed.

In the fiber discfilter including the groove forming means for forming the groove in the surface of the filter cloth, each of the protrusions may be a rigid protrusion with a fixed shape and a fixed size.

The rigid protrusions may be formed in a triangular shape in which a width of an inner end thereof is larger than a width of an outer end thereof.

In the fiber discfilter including the groove forming means for forming the groove in the surface of the filter cloth, each of the protrusions may be an elastic protrusion having a ball installed at an end of an elastically deformable stick.

In the fiber discfilter including the groove forming means for forming the groove in the surface of the filter cloth, the plurality of protrusions may include a combination of two or more types of protrusions having different protruding lengths.

In the fiber discfilter including the groove forming means for forming the groove in the surface of the filter cloth, the groove forming means is configured separately from the cleaning means such that the protrusions are formed on a board fixedly installed on a support for fixing the cleaning means or fixedly installed on a separate structure.

In the fiber discfilter including the groove forming means for forming the groove in the surface of the filter cloth, the protrusions of the groove forming means may be formed or installed directly on the cleaning means so as to be formed integrally with the cleaning means.

In the fiber discfilter including the groove forming means for forming the groove in the surface of the filter cloth, the cleaning means may include a suction holder configured to remove the foreign substances on the filter cloth by sucking the foreign substances, in which the fiber discfilter further includes a blocking means positioned at a rear end of the cleaning means based on a rotation direction of the filter unit, and in which the blocking means has a plurality of blocking protrusions which is inserted into the respective grooves formed in the surface of the filter cloth by the groove forming means to block the grooves in order to reduce a loss of a suction force of the suction holder.

According to the present disclosure having the above-mentioned features, the deep part of the filter cloth, together with the surface part of the filter cloth, exposed to the outside through the groove formed in the surface of the filter cloth having the bristles, such that the foreign substances in the deep part of the filter cloth as well as the foreign substances on the surface of the filter cloth are uniformly captured during the filtering process, and the quantity of captured foreign substances may be increased. Further, during the process of cleaning the filter cloth, the foreign substances captured in the deep part may also be smoothly removed.

In addition, a larger quantity of foreign substances may be captured during the filtering process, and the foreign substances on the surface part and in the deep part of the bristles may be smoothly removed during the cleaning process. As a result, it is possible to reduce cleaning frequency, and increase chemical cleaning or high-pressure cleaning cycles, thereby increasing a lifespan of the filter cloth and reducing maintenance costs.

In addition, according to the groove forming means including the protrusions having elastic sticks and balls, the elastic sticks form the grooves while being deformed in accordance with the states of the bristles, thereby preventing damage to the filter cloth.

In addition, in the case in which the cleaning device includes the suction holder for removing the foreign substances by sucking the foreign substances and the blocking means is further provided at the rear end of the suction holder, the blocking means closes the groove formed in the filter cloth from the portion behind the suction holder, such that the suction force of the suction holder may be prevented from being lost through the groove, thereby further improving efficiency in removing the foreign substances.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a structural front view of a fiber discfilter according to an exemplary embodiment of the present disclosure;
FIG. 2 is a structural side view illustrating a state in which groove forming means having rigid protrusions according to the present disclosure are installed on supports for fixing suction holders and disposed at front and rear sides of a filter segment;
FIG. 3 is a perspective view illustrating a state in which the groove forming means having the rigid protrusions according to the present disclosure is installed on the supports for fixing the suction holder;
FIG. 4 is a top plan view of the groove forming means having a board and the rigid protrusions;
FIG. 5 is a structural side view illustrating a state in which elastic protrusions according to the present disclosure are formed integrally with the suction holders and disposed at the front and rear sides of the filter segment together with the suction holders;
FIG. 6 is a perspective view illustrating a state in which the elastic protrusions according to the present disclosure are formed integrally with the suction holder;
FIG. 7 is a top plan view illustrating a state in which the elastic protrusions according to the present disclosure are formed integrally with the suction holder;
FIG. 8 is a perspective view illustrating a state in which a blocking means according to the present disclosure is further installed at a lower end of the suction holder;
FIG. 9 is a structural front view illustrating an installation position of the groove forming means in a fiber discfilter including a suction-type cleaning means;
FIG. 10 is a structural front view illustrating an installation position of the groove forming means in a fiber discfilter including a spray-type cleaning means;
FIG. 11 is a structural front view illustrating an installation position of the groove forming means in a fiber discfilter including a cleaning means implemented by a combination of the suction-type cleaning means and the spray-type cleaning means; and
FIG. 12 is a front view illustrating a state in which a plurality of grooves is formed in a filter segment assembly by the groove forming means according to the present disclosure.

### DETAILED DESCRIPTION OF THE EMBODIMENT

Hereinafter, exemplary embodiments of the present disclosure will be described in detail with reference to the accompanying drawings. In the description of the present disclosure, the specific descriptions of related well-known functions or configurations will be omitted when it is determined that the specific descriptions may unnecessarily obscure the subject matter of the present disclosure.

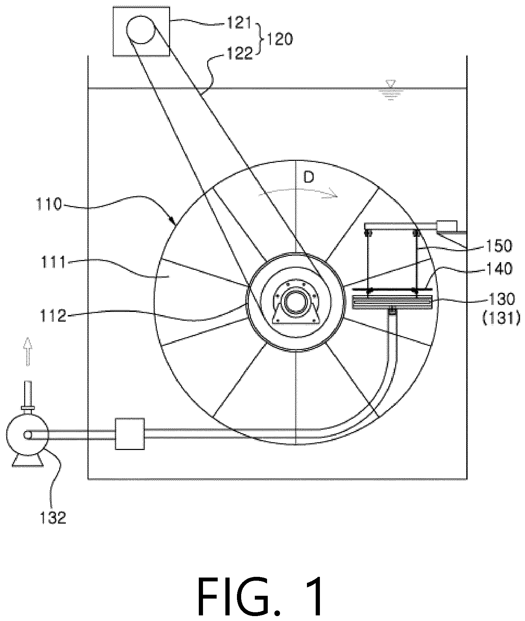

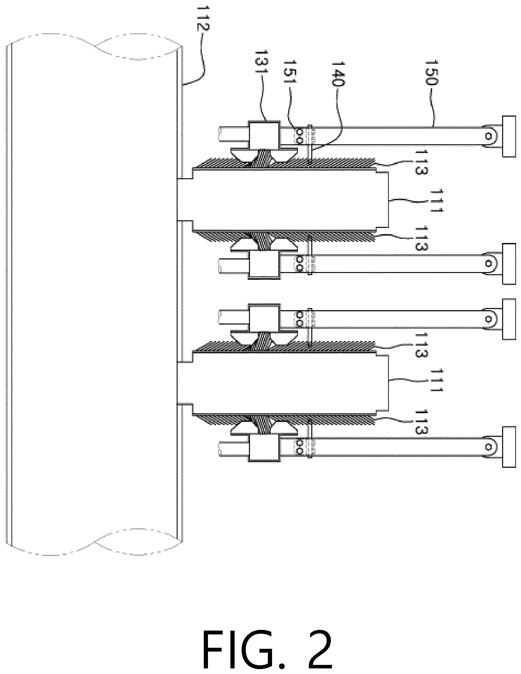

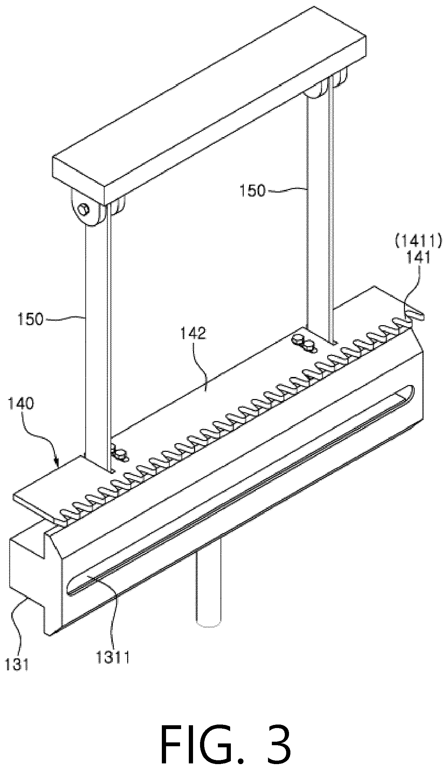

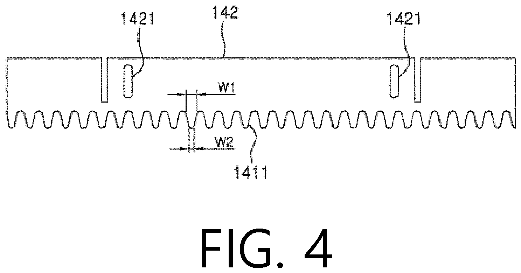

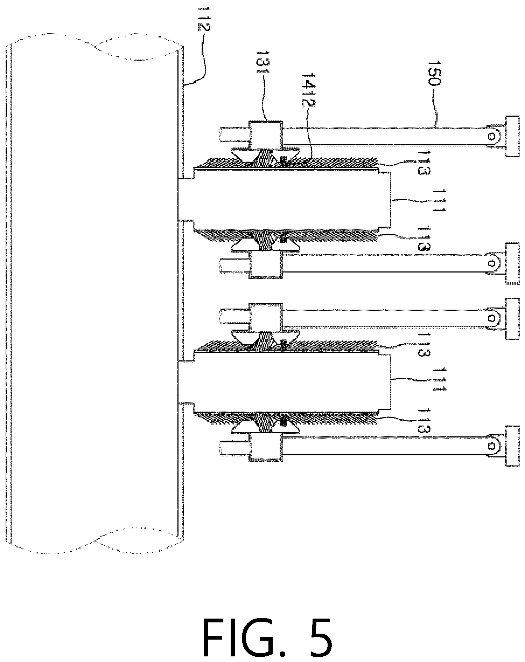

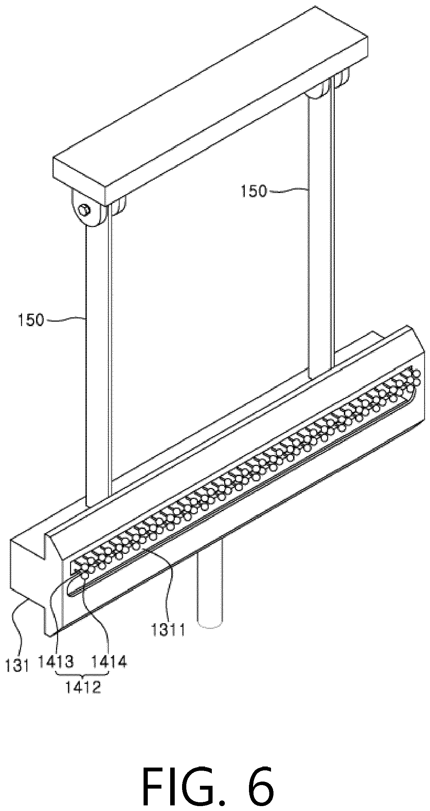

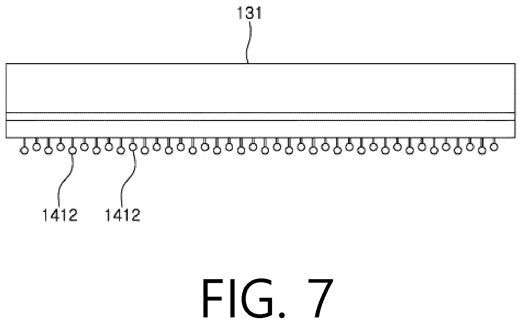

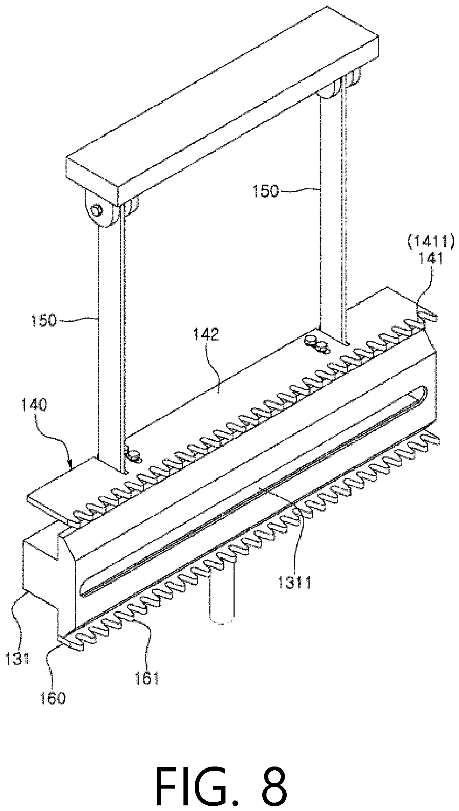

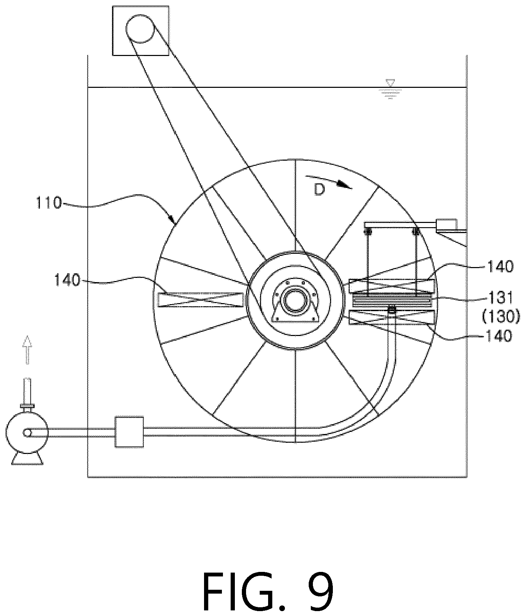

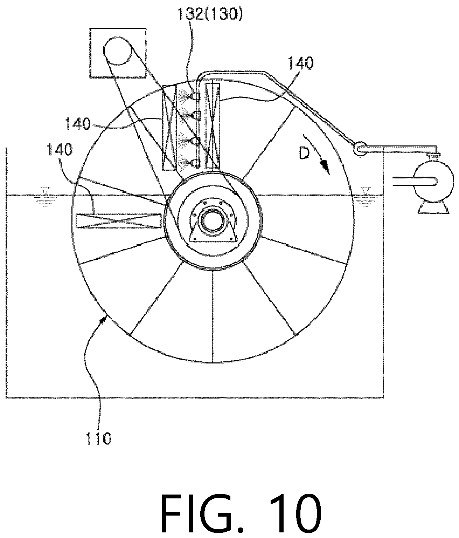

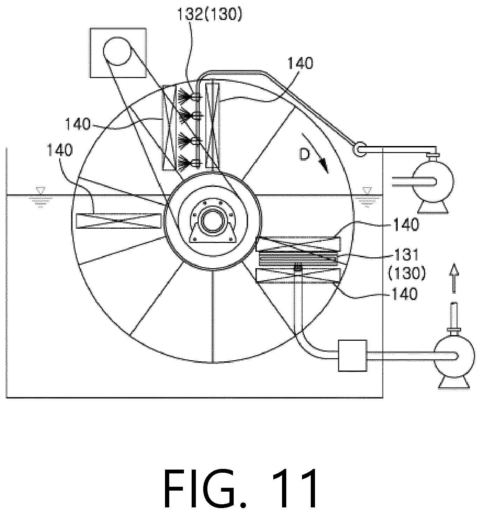

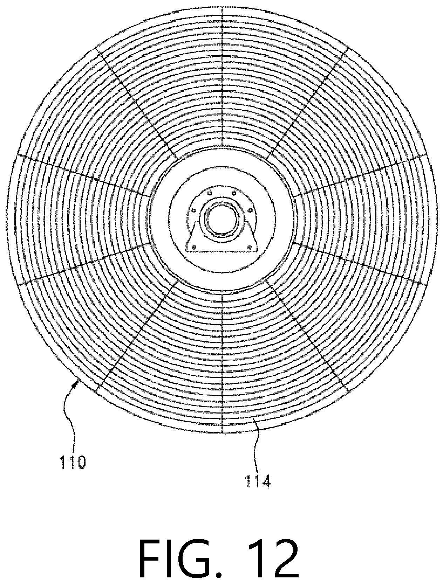

FIG. 1 is a structural front view of a fiber discfilter according to an exemplary embodiment of the present disclosure, FIG. 2 is a structural side view illustrating a state in which groove forming means having rigid protrusions according to the present disclosure are installed on supports for fixing suction holders and disposed at front and rear sides of a filter segment, FIG. 3 is a perspective view illustrating a state in which the groove forming means having the rigid protrusions according to the present disclosure is installed on the supports for fixing the suction holder, FIG. 4 is a top plan view of the groove forming means having a board and the rigid protrusions, FIG. 5 is a structural side view illustrating a state in which elastic protrusions according to the present disclosure are formed integrally with the suction holders and disposed at the front and rear sides of the filter segment together with the suction holders, FIG. 6 is a perspective view illustrating a state in which the elastic protrusions according to the present disclosure are formed integrally with the suction holder, FIG. 7 is a top plan view illustrating a state in which the elastic protrusions according to the present disclosure are formed integrally with the suction holder, FIG. 8 is a perspective view illustrating a state in which a blocking means according to the present disclosure is further installed at a lower end of the suction holder, FIG. 9 is a structural front view illustrating an installation position of the groove forming means in a fiber discfilter including a suction-type cleaning means, FIG. 10 is a structural front view illustrating an installation position of the groove forming means in a fiber discfilter including a spray-type cleaning means, FIG. 11 is a structural front view illustrating an installation position of the groove forming means in a fiber discfilter including a cleaning means implemented by a combination of the suction-type cleaning means and the spray-type cleaning means, and FIG. 12 is a front view illustrating a state in which a plurality of grooves is formed in a filter segment assembly by the groove forming means according to the present disclosure.

A fiber discfilter according to the present disclosure includes a filter unit 110, a drive means 120, a cleaning means 130, and a groove forming means 140.

The filter unit 110 includes a plurality of filter segments 111 provided on an outer portion of a drum 112. Filter cloths 113, which have surfaces on which bristles are disposed, are provided on front and rear surfaces of each of the filter segments 111, such that foreign substances contained in inflow water, which is introduced through the front and rear surfaces of the filter segment 111, are filtered out by the filter cloths 113, and treated water from which the foreign substances are removed is discharged into the drum 112.

Meanwhile, the plurality of filter segments 111 is distributed in a circumferential direction of the drum 112 on the outer portion of the drum 112. The plurality of filter segments 111 is disposed in the circumferential direction of the drum 112 so that lateral surfaces of the two adjacent filter segments 111 are in close contact with each other.

A ring-shaped filter segment assembly, which is configured by the plurality of filter segments 111 disposed and installed in the circumferential direction of the drum 112, is provided in plural, and the plurality of filter segment assemblies is installed to be spaced apart from one another at a predetermined interval in a longitudinal direction of the drum 112.

Therefore, the plurality of filter segments 111 is distributed in the circumferential direction and the longitudinal direction of the drum 112 and configured to be rotated together with the drum 112.

The drive means 120 serves to rotate the drum 112 and includes a motor 121 and a power transmission mechanism 122 connecting the motor 121 and the drum 112. The power transmission mechanism 122 may include a belt or a chain.

The cleaning means 130 are installed to be positioned at front and rear sides of the filter segment assembly installed on the drum 112.

The cleaning means 130 may be configured as a spray-type cleaning device that removes foreign substances by separating the foreign substances captured by the filter cloths 113 by spraying water to the filter cloths 113 using a plurality of spray nozzles 132. Alternatively, the cleaning means 130 may be configured as a suction-type cleaning device that removes foreign substances by collecting the foreign substances, which are captured by the filter cloths 113, by means of vacuum suction using a suction holder 131.

Because the filter unit 110, the drive means 120, and the cleaning means 130 may be configured to be identical to a filter unit, a drive means, and a cleaning means which are applied to a fiber discfilter already widely used, more detailed descriptions of the filter unit 110, the drive means 120, and the cleaning means 130 will be omitted.

The groove forming means 140 serves to form grooves in a surface of the filter cloth 113 that has bristles. The groove forming means 140 has a plurality of protrusions 141 configured to be inserted into the surface of the filter cloth 113. The groove forming means 140 are disposed at the front and rear sides of the ring-shaped filter segment assembly and extend in a direction that traverses a part of the filter segment assembly, such that the groove forming means 140 are configured to form the plurality of grooves 114 in the surfaces of the filter cloths 113 when the filter unit 110 rotates.

Meanwhile, the protrusions 141 may be rigid protrusions 1411 with fixed shapes and fixed sizes and configured to form the grooves in the surface of the filter cloth 113 as the rigid protrusions 1411 are inserted into the surface of the filter cloth 113 that has the bristles.

The rigid protrusion 1411 may be formed in a triangular shape in which a width W1 of an inner end thereof is larger than a width W2 of an outer end thereof so that the rigid protrusion 1411 more smoothly forms the groove by being inserted into the surface of the filter cloth 113 and a deep part of the filter cloth 113 is exposed more appropriately.

In addition, the protrusion 141 may be an elastic protrusion 1412 including a ball 1414 installed at an end of an elastically deformable stick 1413. Like the rigid protrusion 1411, the elastic protrusion 1412 is configured to form the groove in the surface of the filter cloth 113 by being inserted into the surface of the filter cloth 113.

Meanwhile, the stick 1413 is made of spring steel or synthetic resin so as to be elastically deformable. The stick 1413 is bent when a relatively great force is applied due to tangling of the bristles or adhesion of the foreign substances during the process of forming the groove in the surface of the filter cloth 113, thereby preventing damage to the filter cloth 113.

The ball 1414 is installed or formed at the end of the stick 1413 and has a relatively larger diameter than the stick 1413.

According to the elastic protrusion 1412 having the stick 1413 and the ball 1414, the stick 1413 is bent in accordance with the state of the bristles during the process of forming the groove in the surface of the filter cloth 113, thereby preventing a great force from being applied to the bristles and thus preventing damage to the bristles. Further, the ball 1414 having a relatively larger diameter than the stick 1413 is inserted into the surface of the filter cloth 113 and passes between the bristles by the rotation of the filter unit 110, thereby inducing separation and exposure of foreign substances captured in the deep part of the filter cloth 113.

Meanwhile, the plurality of protrusions 141 provided in the groove forming means 140 may include a combination of two or more types of protrusions 141 having different protruding lengths.

For example, FIG. 7 illustrates a configuration in which two types of elastic protrusions 1412 having different protruding lengths are combined.

In the case in which the plurality of protrusions 141 includes the combination of the two or more types of protrusions 141 having different protruding lengths as described above, it is possible to form the grooves having various depths at a time.

The protrusion 141, configured as described above, may be formed or provided on a board 142 fixedly installed on supports 150 for supporting the cleaning means 130, or the protrusion 141 may be formed or provided on the board 142 fixedly installed on a separate structure. The protrusion 141 may be configured as a structure provided separately from or independently of the cleaning means 130, or the protrusion 141 may be formed or provided directly on the cleaning means 130 so that the protrusion 141 is provided integrally with the cleaning means 130.

Meanwhile, the board 142 has rectangular bolt through ports 1421 that elongate and extend in a direction orthogonal to the surface of the filter cloth 113, such that depths of the protrusions 141 inserted into the surface of the filter cloth 113 may be adjusted in accordance with the state of the filter cloth 113.

That is, angled brackets 151, which are bent in an L shape, are installed on the supports 150 or the structures on which the board 142 is fixedly installed, the board 142 is fixed by bolting in the state in which the board 142 is seated on the angled brackets 151, and the rectangular bolt through ports 1421 extending in the direction orthogonal to the surface of the filter cloth 113 are formed in the board 142. Therefore, the board 142 may be fixed to the angled brackets 151 by bolting in a state in which positions of the protrusions 141 are adjusted by moving the board 142 toward or away from the filter cloth 113. As a result, a manager may adjust the insertion depths of the protrusions 141 in accordance with the state of the filter cloth 113.

The fiber discfilter including the groove forming means 140 configured as described above may further include a blocking means 160 configured to prevent efficiency in sucking foreign substances from deteriorating due to an inflow of outside air through the groove formed in the surface of the filter cloth 113.

The blocking means 160 is restrictively applied only in the case in which the cleaning means 130 includes the suction holder 131. The blocking means 160 is disposed to be positioned at a rear end of the suction holder 131 based on a rotation direction D of the filter unit 110. The blocking means 160 may be fixedly installed on the suction holder 131 or fixedly installed on a separate bracket.

The blocking means 160 includes a plurality of blocking protrusions 161 which are inserted into the grooves formed in the surface of the filter cloth 113 by the groove forming means 140, thereby blocking flow paths formed by the grooves.

The blocking means 160 formed as described above closes the grooves formed in the filter cloth 113 from a portion behind the suction holder 131, thereby preventing a suction force of the suction holder 131 from being lost through the grooves during the process in which the suction holder 131 sucks the foreign substances captured in the filter cloth 113, and thus inducing smooth suction of the foreign substances.

Like a general fiber discfilter, the fiber discfilter according to the present disclosure configured as described above is installed in a water channel or a water tub into which inflow water such as wastewater, dirty water, purified water, rainwater, or process water is introduced, and the fiber discfilter filters out foreign substances contained in the inflow water.

The groove forming means 140 according to the present disclosure may be installed at the front end or the rear end of the cleaning means 130 based on the rotation direction D of the filter unit 110. Alternatively, the groove forming means 140 may be installed at any position as long as the groove forming means 140 may smoothly form the groove in the surface of the filter cloth 113 without interfering with peripheral structures.

For example, FIG. 9 illustrates a structure in which the groove forming means 140 is installed on at least one of the front end of the suction holder 131, the rear end of the suction holder 131, and any position irrelevant to the suction holder 131. FIG. 10 illustrates structure in which the groove forming means 140 is installed on at least one of the front end of the spray nozzle 132, the rear end of the spray nozzle 132, and any position irrelevant to the spray nozzle 132. FIG. 11 illustrates a structure in which the groove forming means 140 is installed on at least one of the front and rear ends of the suction holder 131, the front and rear ends of the spray nozzle 132, and any position.

As described above, the groove forming means 140 according to the present disclosure may be freely installed without limitation to the installation position.

Meanwhile, during the filtering process of filtering the inflow water using the filter cloth 113 provided in the filter segment 111, the filter unit 110 may be rotated intermittently or consistently to always form the grooves in the surface of the filter cloth 113.

Meanwhile, the groove formed in the surface of the filter cloth 113 exposes the deep part of the filter cloth 113, thereby establishing an environment in which the foreign substances may be captured not only on the surface of the filter cloth 113, but also in the deep part of the filter cloth 113 during the filtering process of filtering the inflow water. As a result, in comparison with the related art, a larger quantity of foreign substances may be captured by the single filtering process, and the cleaning cycle may be increased.

Meanwhile, the groove forming means 140 according to the present disclosure improves cleaning efficiency while forming the groove in the surface of the filter cloth 113 even during the process of cleaning the filter cloth 113.

That is, the protrusions 141 provided on the groove forming means 140 according to the present disclosure are always kept inserted into the surface of the filter cloth 113 regardless of the filtering process or the cleaning process. Therefore, when the filter unit 110 rotates to perform the cleaning process, the plurality of grooves 114 extending in the circumferential direction of the filter unit 110 is formed in the surface of the filter cloth 113 in accordance with the rotational operation of the filter unit 110.

As described above, the plurality of grooves 114 formed in the surface of the filter cloth 113 exposes the foreign substances, which are captured in the deep part of the filter cloth 113, to the outside. In the state in which the foreign substances in the deep part are exposed through the plurality of grooves 114, the spray nozzle 132 constituting the cleaning means 130 sprays water or the suction holder 130 sucks the foreign substances, and as a result, not only the foreign substances on the surface of the filter cloth 113 may be removed, but also the foreign substances in the deep part may be effectively removed.

As described above, the fiber discfilter according to the present disclosure forms the plurality of grooves in the surface of the filter cloth 113 using the groove forming means 140, such that the foreign substances in the deep part of the filter cloth 113 as well as the foreign substances on the surface of the filter cloth 113 may be uniformly captured during the filtering process. As a result, the present disclosure is a very useful invention because the quantity of captured foreign substances may be significantly increased, and all the foreign substances on the surface part of the filter cloth 113 and in the deep part of the filter cloth 113 may be smoothly removed during the cleaning process.

The present disclosure is not limited to the specific exemplary embodiment described above, various modifications can be made by any person skilled in the art to which the present disclosure pertains without departing from the subject matter of the present disclosure as claimed in the claims, and the modifications are within the scope defined by the claims.

## Claims

1. A fiber discfilter with a means of forming grooves on a surface of filter cloths, the fiber discfilter comprising:
a filter unit (110) configured such that a plurality of filter segments (111) each having front and rear surfaces on which filter cloths (113) each having a surface provided with bristles are installed is installed on an outer portion of a drum (112) so that inflow water is filtered by being introduced into the filter segments (111) while passing through the filter cloths (113);
a cleaning means (130) configured to remove foreign substances captured in the filter cloths (113); and
a groove forming means (140) disposed to be positioned at the periphery of the filter unit (110) and having a plurality of protrusions (141) configured to be inserted into the surface of the filter cloth (113) and to form grooves in the surface of the filter cloth (113) when being inserted into the surface of the filter cloth (113) and the filter unit (110) rotates, thereby exposing foreign substances captured in the deep part of the filter cloth (113), because during a process of filtering the inflow water foreign substances are uniformly captured on the surface of the filter cloth (113) and in a deep part of the filter cloth (113), during a process of cleaning the filter cloth (113), such that the foreign substances captured in the deep part can be easily removed,
wherein the groove forming means (140) is configured separately from the cleaning means (130) such that the protrusions (141) are formed on a board (142) fixedly installed on a support (150) for fixing the cleaning means (130) or fixedly installed on a separate structure.

2. The fiber discfilter of claim 1, wherein each of the protrusions (141) is a rigid protrusion (1411) with a fixed shape and a fixed size.

3. The fiber discfilter of claim 2, wherein the rigid protrusions (1411) is formed in a triangular shape in which a width (W1) of an inner end thereof is larger than a width (W2) of an outer end thereof.

4. The fiber discfilter of claim 1, wherein each of the protrusions (141) is an elastic protrusion (1412) having a ball (1414) installed at an end of an elastically deformable stick (1413).

5. The fiber discfilter of claim 1, wherein the plurality of protrusions (141) comprises a combination of two or more types of protrusions (141) having different protruding lengths.

6. The fiber discfilter of claim 1, wherein the protrusions (141) of the groove forming means (140) are formed or installed directly on the cleaning means (130) so as to be formed integrally with the cleaning means (130).

7. The fiber discfilter of claim 1, wherein the cleaning means (130) comprises a suction holder (131) configured to remove the foreign substances on the filter cloth (113) by sucking the foreign substances,
wherein the fiber discfilter further comprises a blocking means (160) positioned at a rear end of the cleaning means (130) based on a rotation direction (D) of the filter unit (110), and
wherein the blocking means (160) has a plurality of blocking protrusions (161) which is inserted into the respective grooves formed in the surface of the filter cloth (113) by the groove forming means (140) to block the grooves in order to reduce a loss of a suction force of the suction holder (131).

## Patentansprüche

1. Faserscheibenfilter mit einem Mittel zur Bildung von Rillen auf einer Oberfläche von Filtertüchern, wobei der Faserscheibenfilter umfasst:
eine Filtereinheit (110), die so konfiguriert ist, dass eine Mehrzahl von Filtersegmenten (111), die jeweils eine vordere und eine hintere Oberfläche aufweisen, auf denen Filtertücher (113) mit jeweils einer mit Borsten versehenen Oberfläche angebracht sind, auf einem äußeren Abschnitt einer Trommel (112) angebracht ist, so dass Zulaufwasser gefiltert wird, indem es in die Filtersegmente (111) eingeleitet wird, während es die Filtertücher (113) durchläuft;
ein Reinigungsmittel (130), das so konfiguriert ist, dass es in den Filtertüchern (113) festgehaltene Fremdstoffe entfernt; und
ein Rillenbildungsmittel (140), das so angeordnet ist, dass es am Umfang der Filtereinheit (110) positioniert ist, und das eine Mehrzahl von Vorsprüngen (141) aufweist, die so konfiguriert sind, dass sie in die Oberfläche des Filtertuchs (113) eingesetzt werden und Rillen in der Oberfläche des Filtertuchs (113) bilden, wenn sie in die Oberfläche des Filtertuchs (113) eingesetzt werden, und sich die Filtereinheit (110) dreht, wodurch in dem tiefen Teil des Filtertuchs (113) festgehaltene Fremdstoffe freigelegt werden, da während eines Prozesses des Filterns des Zulaufwassers Fremdstoffe gleichmäßig auf der Oberfläche des Filtertuches (113) und in einem tiefen Teil des Filtertuches (113) während eines Prozesses des Reinigens des Filtertuches (113) festgehalten werden, so dass die in dem tiefen Teil festgehaltenen Fremdstoffe leicht entfernt werden können,
wobei das Rillenbildungsmittel (140) separat von dem Reinigungsmittel (130) so konfiguriert ist, dass die Vorsprünge (141) auf einer Platte (142) ausgebildet sind, die fest an einer Stütze (150) angebracht ist, um das Reinigungsmittel (130) zu fixieren, oder fest an einer separaten Struktur angebracht ist.

2. Faserscheibenfilter nach Anspruch 1, wobei jeder der Vorsprünge (141) ein starrer Vorsprung (1411) mit einer festen Form und einer festen Größe ist.

3. Faserscheibenfilter nach Anspruch 2, wobei die starren Vorsprünge (1411) in einer dreieckigen Form ausgebildet sind, bei der eine Breite (W1) eines inneren Endes davon größer als eine Breite (W2) eines äußeren Endes davon ist.

4. Faserscheibenfilter nach Anspruch 1, wobei jeder der Vorsprünge (141) ein elastischer Vorsprung (1412) mit einer Kugel (1414) ist, die an einem Ende eines elastisch verformbaren Stabs (1413) angebracht ist.

5. Faserscheibenfilter nach Anspruch 1, wobei die Mehrzahl von Vorsprüngen (141) eine Kombination von zwei oder mehr Arten von Vorsprüngen (141) mit unterschiedlichen vorstehenden Längen umfasst.

6. Faserscheibenfilter nach Anspruch 1, wobei die Vorsprünge (141) des Rillenbildungsmittels (140) direkt an dem Reinigungsmittel (130) ausgebildet oder angebracht sind, so dass sie einstückig mit dem Reinigungsmittel (130) ausgebildet sind.

7. Faserscheibenfilter nach Anspruch 1, wobei das Reinigungsmittel (130) einen Saughalter (131) umfasst, der so konfiguriert ist, dass er die Fremdstoffe auf dem Filtertuch (113) durch Ansaugen der Fremdstoffe entfernt, wobei der Faserscheibenfilter weiterhin ein Blockiermittel (160) umfasst, das an einem hinteren Ende des Reinigungsmittels (130) basierend auf einer Drehrichtung (D) der Filtereinheit (110) positioniert ist, und wobei das Blockiermittel (160) eine Mehrzahl von Blockiervorsprüngen (161) aufweist, die in die jeweiligen Rillen, die in der Oberfläche des Filtertuchs (113) durch das Rillenbildungsmittel (140) gebildet sind, eingesetzt sind, um die Rillen zu blockieren, um einen Verlust einer Saugkraft des Saughalters (131) zu reduzieren.

## Revendications

1. Filtre à disque en fibres comprenant un moyen de formation de rainures sur la surface de toiles filtrantes, ledit filtre à disque en fibres comprenant :
une unité de filtre (110) prévue de sorte qu'une pluralité de segments de filtre (111) présentant chacun une surface avant et une surface arrière sur lesquelles des toiles filtrantes (113) ayant chacune une surface pourvue de poils sont installées, sont présentées sur une partie extérieure d'un tambour (112), de sorte que de l'eau d'admission est filtrée par pénétration dans les segments de filtre (111) en traversant les toiles filtrantes (113) ;
un moyen de nettoyage (130) prévu pour éliminer des matières étrangères capturées dans les toiles filtrantes (113) ; et
un moyen de formation de rainures (140) disposé de manière à être placé à la périphérie de l'unité de filtre (110) et pourvu d'une pluralité de saillies (141) prévues pour être insérées dans la surface de la toile filtrante (113) et pour former des rainures dans la surface de la toile filtrante (113) en étant insérées dans la surface de la toile filtrante (113), l'unité de filtre (110) étant tournée, exposant ainsi les matières étrangères capturées dans la profondeur de la toile filtrante (113), du fait que, lors d'un processus de filtrage de l'eau d'admission, les matières étrangères sont capturées uniformément à la surface de la toile filtrante (113) et dans la profondeur de la toile filtrante (113), lors d'un processus de nettoyage de la toile filtrante (113), de sorte que les matières étrangères capturées en profondeur de peuvent être facilement éliminées,
où le moyen de formation de rainures (140) est prévu séparément du moyen de nettoyage (130), de sorte que les saillies (141) sont formées sur une carte (142) montée fixement sur un support (150) pour fixer le moyen de nettoyage (130), ou montée fixement sur une structure séparée.

2. Filtre à disque en fibres selon la revendication 1, où chacune des saillies (141) est une saillie rigide (1411) de forme et de dimension fixes.

3. Filtre à disque en fibres selon la revendication 2, où les saillies rigides (1411) sont de forme triangulaire, la largeur (W1) d'une extrémité intérieure de celles-ci étant supérieure à la largeur (W2) d'une extrémité extérieure.

4. Filtre à disque en fibres selon la revendication 1, où chacune des saillies (141) est une saillie élastique (1412) pourvue d'une bille (1414) installée à une extrémité d'une tige (1413) élastiquement déformable.

5. Filtre à disque en fibres selon la revendication 1, où la pluralité de saillies (141) comprend une combinaison de deux ou de plusieurs types de saillies (141) de longueurs différentes.

6. Filtre à disque en fibres selon la revendication 1, où les saillies (141) du moyen de formation de rainures (140) sont formées ou installées directement sur le moyen de nettoyage (130) de manière à être formées d'un seul tenant avec le moyen de nettoyage (130).

7. Filtre à disque en fibres selon la revendication 1, où le moyen de nettoyage (130) comprend un ventouse (131) prévue pour éliminer les matières étrangères sur la toile filtrante (113) par aspiration des matières étrangères,
où ledit filtre à disque en fibres comprend en outre un moyen de blocage (160) placé à l'extrémité arrière du moyen de nettoyage (130) dans le sens de rotation (D) de l'unité de filtre (110), et
où ledit moyen de blocage (160) comporte une pluralité de saillies de blocage (161) insérées dans les rainures respectives formées dans la surface de la toile filtrante (113) par le moyen de formation de rainures (140) pour bloquer les rainures, afin de réduire une perte de force d'aspiration de la ventouse (131).
